# EUROPEAN PATENT APPLICATION

(11) **EP 1 749 999 A2**
(43) Date of publication of application: **07.02.2007**
(21) Application number: 06016035.5
(22) Date of filing: 01.08.2006
(51) Int. Cl.: F02D 41/40, F02D 13/02

(54) **Fuel injection control system and method of compression ignition internal combustion engine**

(30) Priority: 05.08.2005 JP 2005228045
(71) Applicant: TOYOTA JIDOSHA KABUSHIKI KAISHA, Toyota-shi, Aichi-ken 471-8571 (JP)
(72) Inventor: Ishiyama, Shinobu, Toyota-shi Aichi-ken, 471-8571 (JP); Hattori, Fumiaki, Toyota-shi Aichi-ken, 471-8571 (JP)
(74) Representative: Winter, Brandl, Fürniss, Hübner Röss, Kaiser, Polte Partnerschaft Patent- und Rechtsanwaltskanzlei

(57) **Abstract**

A fuel injection control system and fuel injection control method of a compression ignition internal combustion engine which can perform a primary fuel injection and a secondary fuel injection, reduces an actual compression ratio of the compression ignition internal combustion engine when the secondary fuel injection is performed (S103) compared to when the secondary fuel injection is not performed (S104), thereby further increasing the fuel injection quantity per one secondary fuel injection while inhibiting a rise in temperature of the combustion chamber. As a result, the combustion state of the fuel can be stabilized as quickly as possible while the temperature of the combustion chamber can be inhibited from rising too high.

## Description

### BACKGROUND OF THE INVENTION

### 1. Field of the Invention

The invention relates to a fuel injection control system and method of a compression ignition internal combustion engine.

### 2. Description of the Related Art

In recent years there has been a trend to try to reduce the compression ratio in compression ignition internal combustion engines in order to gain more output. When the compression ratio is reduced, however, the temperature of the combustion chamber decreases. This decrease in temperature may result in the ignition delay time becoming excessively long, which may in turn lead to deterioration in combustion noise and exhaust emissions.

Therefore, Japanese Patent Application Publication No. JP-A-2003-269229 describes a fuel injection control system of a compression ignition internal combustion engine which performs a plurality of secondary fuel injections before performing a primary fuel injection.

In addition, Japanese Patent No. 3116876 describes technology in a compression ignition internal combustion engine which progressively retards the closing timing of an intake valve as the engine load increases.

In an compression ignition internal combustion engine, performing a secondary fuel injection before the primary fuel injection is performed and at a timing at which fuel of the secondary fuel injection will burn in the combustion chamber increases the temperature of the combustion chamber during the primary fuel injection. As a result, the ignition delay time is able to be inhibited from becoming excessively long.

When a secondary fuel injection is performed, however, the pulsation effect of the fuel pressure may make it difficult to accurately control an extremely small secondary fuel injection quantity. If the secondary fuel injection quantity becomes unstable, it may result in an unstable combustion state in the combustion chamber. On the other hand, if the secondary fuel injection quantity is excessively large, it may lead to a rise in temperature in the combustion chamber.

### SUMMARY OF THE INVENTION

In view of the foregoing problems, this invention thus provides a fuel injection control system of a compression ignition internal combustion engine which stabilizes the combustion state of the fuel as quickly as possible while inhibiting an excessive rise in temperature of the combustion chamber.

The invention reduces the actual compression ratio of a compression ignition internal combustion engine (hereinafter simply referred to as "actual engine compression ratio") in order to make the secondary fuel injection quantity a quantity which can be controlled more accurately, when performing a secondary fuel injection in a compression ignition internal combustion engine.

More specifically, one aspect of the invention relates to a fuel injection control system of a compression ignition internal combustion engine which, using a fuel injection valve that injects fuel directly into a combustion chamber, can perform a primary fuel injection, and a secondary fuel injection that is performed before the primary fuel injection is performed and at a timing at which fuel of the secondary fuel injection will burn in the combustion chamber, characterised by including actual compression ratio controlling means for reducing an actual compression ratio of the compression ignition internal combustion engine according to a condition related to the secondary fuel injection.

Another aspect of the invention relates to a fuel injection control method of a compression ignition internal combustion engine which, using a fuel injection valve that injects fuel directly into a combustion chamber, can perform a primary fuel injection, and a secondary fuel injection that is performed before the primary fuel injection is performed and at a timing at which fuel of the secondary fuel injection will burn in the combustion chamber, characterised by including the step of reducing an actual compression ratio of the compression ignition internal combustion engine according to a condition related to the secondary fuel injection.

Here, switching between performing the secondary fuel injection and not performing the secondary fuel injection depending on an operating state of the compression ignition internal combustion engine may be performed, and the actual compression ratio of the compression ignition internal combustion engine may be reduced during the condition in which the secondary fuel injection is performed compared to during a condition in which the secondary fuel injection is not performed.

According to the invention, when the operating state of the compression ignition internal combustion engine is such that the temperature of the combustion chamber will become relatively high even when only the primary fuel injection is performed, then a secondary fuel injection is not performed. On the other hand, when the operating state of the compression ignition internal combustion engine is such that the temperature of the combustion chamber will become relatively low when only the primary fuel injection is performed, then a secondary fuel injection is performed.

If the actual engine compression ratio is reduced, the temperature of the combustion chamber when fuel burns will decrease. Therefore, an increase in temperature of the combustion chamber can be inhibited when the actual engine compression ratio is relatively low compared to when the actual engine compression ratio is relatively high, even if a secondary fuel injection is performed.

Therefore, according to the invention, the actual engine compression ratio is reduced when the secondary fuel injection is performed compared to when the secondary fuel injection is not performed.

As a result, it is possible to further increase the fuel injection quantity per one secondary fuel injection while inhibiting an excessive rise in temperature of the combustion chamber when a secondary fuel injection is performed. Also, increasing the fuel injection quantity per one secondary fuel injection enables that fuel injection quantity to be more accurately controlled.

Accordingly, the combustion state of the fuel can be stabilized as quickly as possible while inhibiting an excessive increase in temperature of the combustion chamber.

The number of times the secondary fuel injection is performed during one combustion cycle may be changed according to an operating state of the compression ignition internal combustion engine, and the actual compression ratio of the compression ignition internal combustion engine may be progressively reduced during the condition in which the number of times the secondary fuel injection is performed during one combustion cycle becomes progressively greater.

According to the invention, when the operating state of the compression ignition internal combustion engine is such that the temperature of the combustion chamber will become relatively low, then the number of times the secondary fuel injection is performed during one combustion cycle is increased compared to when the operating state of the compression ignition internal combustion engine is such that the temperature of the combustion chamber will become relatively high.

The actual engine compression ratio is reduced the greater the number of times the secondary fuel injection is performed during one combustion cycle.

As a result, the fuel injection quantity per one secondary fuel injection can be increased while inhibiting an excessive rise in temperature of the combustion chamber, even if the number of times that the secondary fuel injection is performed during one combustion cycle is increased. Increasing the fuel injection quantity per one secondary fuel injection enables that fuel injection quantity to be more accurately controlled.

Therefore, according to the invention, the combustion state of the fuel can be stabilized as quickly as possible while inhibiting an excessive rise in temperature of the combustion chamber, as described above.

As described above, the fuel injection control system and fuel injection control method of a compression ignition internal combustion engine according to the invention make it possible to stabilize the combustion state of the fuel as quickly as possible while inhibiting an excessive rise in temperature of the combustion chamber, as described above.

### BRIEF DESCRIPTION OF THE DRAWINGS

The features, advantages thereof, and technical and industrial significance of this invention will be better understood by reading the following detailed description of preferred embodiments of the invention, when considered in connection with the accompanying drawings, in which:
FIG. 1 is a block diagram of an internal combustion engine according to first and second exemplary embodiments of the invention;
FIG. 2 is a flowchart illustrating a control routine for valve timing and fuel injection control according to the first exemplary embodiment of the invention; and
FIG. 3 is a flowchart illustrating a control routine for valve timing and fuel injection control according to the second exemplary embodiment of the invention.

### DETAILED DESCRIPTION OF THE PREFERRED EMBODIMENTS

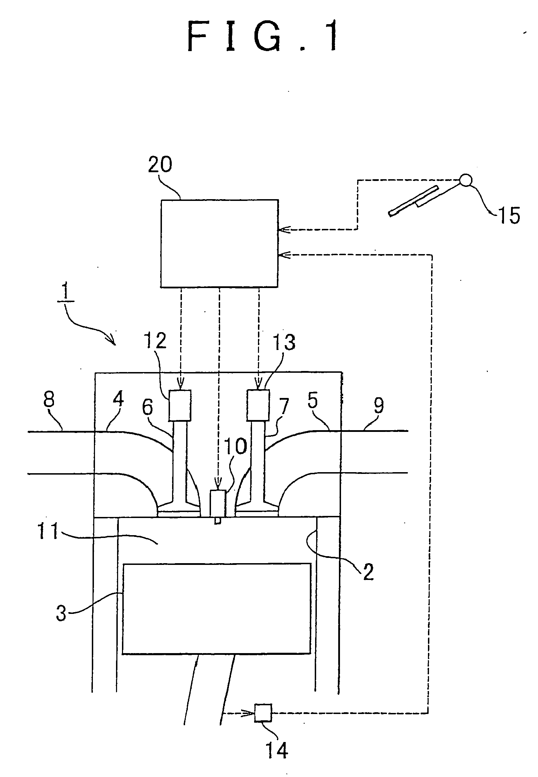

In the following description and the accompanying drawings, the present invention will be described in more detail in terms of exemplary embodiments. FIG. 1 is a view schematically showing the structure of a compression ignition internal combustion engine according to a first example embodiment. An internal combustion engine 1 is a compression ignition internal combustion engine for driving a vehicle. A piston 3 is slidably provided in a cylinder 2 of the internal combustion engine 1. An intake port 4 and an exhaust port 5 are connected to a combustion chamber 11 in the upper portion in the cylinder 2.

An intake valve 6 opens and closes a portion where the intake port 4 opens to the combustion chamber 11. Similarly, an exhaust valve 7 opens and closes a portion where the intake port 4 opens to the combustion chamber 11. Variable valve mechanisms 12 and 13 which control the valve timing are provided for the intake valve 6 and the exhaust valve 7, respectively.

The intake port 4 is connected to an intake passage 8 and the exhaust port 5 is connected to an exhaust passage 9. Further, a fuel injection valve 10 which injects fuel directly into the combustion chamber 11 is provided in the cylinder 2.

The internal combustion engine 1 structured as described above is also provided with an ECU 20 which controls the internal combustion engine 1. This ECU 20 is connected via electric wiring to a crankshaft position sensor 14 which detects a crank angle of the internal combustion engine 1, and an accelerator opening amount sensor 15 which detects an accelerator opening amount of the vehicle in which the internal combustion engine 1 is mounted. The ECU 20 receives output values from these sensors.

The ECU 20 estimates the speed of the internal combustion engine 1 based on the detection value of the crankshaft position sensor 14. The ECU 20 also estimates the load on the internal combustion engine 1 based on the detection value of the accelerator opening amount sensor 15.

The ECU 20 is also electrically connected to the variable valve mechanisms 12 and 13 and the fuel injection valve 10, and the variable valve mechanisms 12 and 13 and the fuel injection valve 10 are controlled by the ECU 20.

According to the first exemplary embodiment, the fuel injection valve 10 performs a primary fuel injection when the piston 3 is near TDC (top dead center) of the compression stroke. When only the primary fuel injection is performed, the temperature of the combustion chamber 11 falls as the load on the engine 1 decreases. Therefore, when the load on the internal combustion engine 1 is equal to or less than a predetermined load, the fuel injection valve 10 performs a secondary fuel injection in addition to the primary fuel injection in order to increase the temperature of the combustion chamber 11 during the primary fuel injection.

This secondary fuel injection is performed before the primary fuel injection is performed and at a timing, when the injected fuel from this secondary fuel injection will burn in the combustion chamber 11. This secondary fuel injection raises the temperature of the combustion chamber 11 when the primary fuel injection is performed, which inhibits the ignition delay time from becoming excessively long. The secondary fuel injection may performed once or a plurality of times per one combustion cycle.

Here, the predetermined load is an engine load which is a threshold that makes it possible to determine whether the ignition delay time may become excessively long due to the temperature of the combustion chamber 11 being low when the secondary fuel injection is not performed.

However, if the fuel injection quantity per one secondary fuel injection is extremely small, it may be difficult to accurately control. If the secondary fuel injection quantity is excessively large, on the other hand, the temperature of the combustion chamber 11 may rise too high.

Therefore, according to the first exemplary embodiment, the variable valve mechanism 12 retards the closing timing of the intake valve 6 when the load on the internal combustion engine 1 is equal to or less than the predetermined load compared with when the load on the internal combustion engine 1 is greater than that predetermined load, thereby reducing the actual engine compression ratio. That is, the actual compression ratio is reduced when the secondary fuel injection is performed compared with when the secondary fuel injection is not performed. The fuel injection quantity per one secondary fuel injection is made a quantity which can be accurately controlled.

When the actual engine compression ratio is reduced, the temperature of the combustion chamber 11 when fuel is burned lowers. Therefore, even if a secondary fuel injection is performed, a rise in temperature of the combustion chamber 11 can be suppressed by reducing the actual engine compression ratio. As a result, the fuel injection quantity per one secondary fuel injection can be increased while suppressing an excessive rise in temperature of the combustion chamber 11. That is, the fuel injection quantity per one secondary fuel injection can be made a quantity which can be accurately controlled.

According to this first exemplary embodiment, the control described above enables the combustion state of fuel to be stabilized as quickly as possible while suppressing an excessive increase in temperature of the combustion chamber 11.

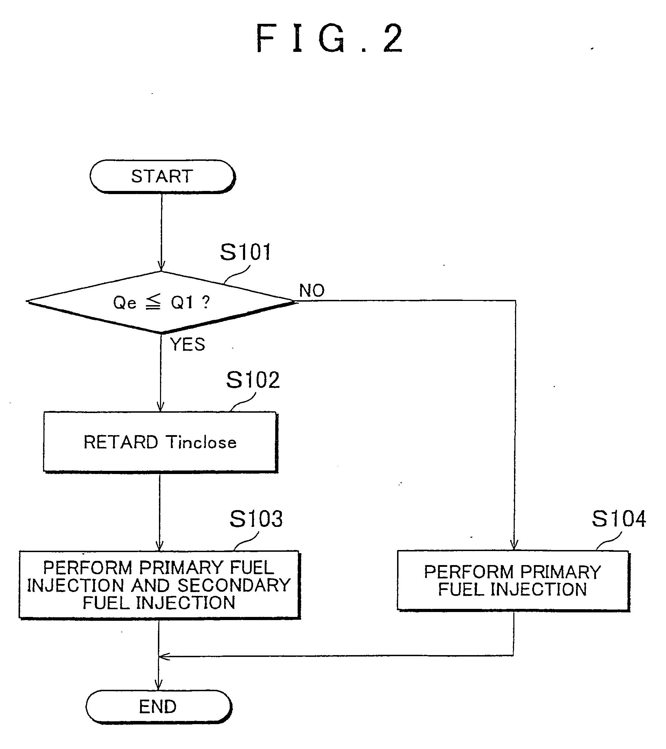

Here, a control routine for valve timing and fuel injection control according to the first exemplary embodiment will be described with reference to the flowchart shown in FIG. 2. This routine is stored in the ECU 20 in advance and executed at predetermined intervals of time.

In this routine, the ECU 20 determines first in step S101 whether an engine load Qe is equal to or less than a predetermined load Q1 according to the first exemplary embodiment. If the determination is yes, the process proceeds on to step S 102. If the determination is no, the process proceeds on to step S 104.

In step S104, the ECU 20 performs only a primary fuel injection, after which the routine ends.

In step S 102, on the other hand, the ECU 20 retards a closing timing Tinclose of the intake valve 6 compared with when the engine load Qe is greater than the predetermined load Q1.

Step S103 is then executed in which the ECU 20 performs both a primary fuel injection and a secondary fuel injection, after which the routine ends.

The retard amount of the closing timing Tinclose of the intake valve 6 in step S102, and the number of times the secondary fuel injection is performed per one combustion cycle as well as the fuel injection quantity per one secondary fuel injection in step S103 are determined according to the load Qe on the internal combustion engine 1. The fuel injection quantity per one secondary fuel injection is controlled to a quantity that can be accurately controlled. Also, the closing timing Tinclose of the intake valve 6 is controlled such that the actual engine compression ratio becomes a value than inhibits the temperature of the combustion chamber 11 from rising too high even when the secondary fuel injection is performed.

Next, a second exemplary embodiment of the invention will be described. The schematic structure of the internal combustion engine according to the second exemplary embodiment is the same as that of the first exemplary embodiment so a description thereof will be omitted.

According to the second exemplary embodiment, the fuel injection valve 10 performs a primary fuel injection and a secondary fuel injection throughout the entire load range. Just as in the first exemplary embodiment, the primary fuel injection is performed when the piston 3 is near TDC (top dead center) of the compression stroke, and the secondary fuel injection is performed before the primary fuel injection is performed and at a timing at which the fuel of the secondary fuel injection will burn in the combustion chamber 11.

Increasing the number of times the secondary fuel injection is performed during one combustion cycle further increases the temperature of the combustion chamber 11 when the primary fuel injection is performed. Therefore, according to the second exemplary embodiment, when the load on the internal combustion engine 1 is equal to or less than a predetermined load, the secondary fuel injection is performed twice during one combustion cycle, and when the load on the internal combustion engine 1 is greater than the predetermined load, the secondary fuel injection is performed once during one combustion cycle.

Here, the predetermined load is an engine load which is a threshold value by which it is possible to determine whether the ignition delay time may become excessively long due to the temperature of the combustion chamber I1 being low when the secondary fuel injection is performed once.

The number of times the secondary fuel injection is performed during one combustion cycle is not limited to the numbers described above as long as it increases the lower the engine load.

Here, as described above, when the fuel injection quantity per one secondary fuel injection is extremely small, it may be difficult to accurately control. If the secondary fuel injection quantity is excessively large, on the other hand, the temperature of the combustion chamber 11 may become too high. Also, the total quantity of the secondary fuel injections inevitably increases the greater the number of secondary fuel injections during one combustion cycle.

Therefore, in the second exemplary embodiment as well, just as in the first exemplary embodiment, the fuel injection quantity per one secondary fuel injection is made a quantity that can be accurately controlled. The variable valve mechanism 12 retards the closing timing of the intake valve 6 when the load on the internal combustion engine 1 is equal to or less than a predetermined load compared to when the load on the internal combustion engine 1 is greater than the predetermined load, thereby reducing the actual engine compression ratio. That is, the actual engine compression ratio is progressively reduced the greater the number of times the secondary fuel injection is performed in one combustion cycle. As a result, the fuel injection quantity per one secondary injection can be increased while the temperature of the combustion chamber 11 can be inhibited from rising too high.

According to this second exemplary embodiment, the control described above enables the combustion state of the fuel to be stabilized as quickly as possible while inhibiting an excessive rise in temperature of the combustion chamber 11.

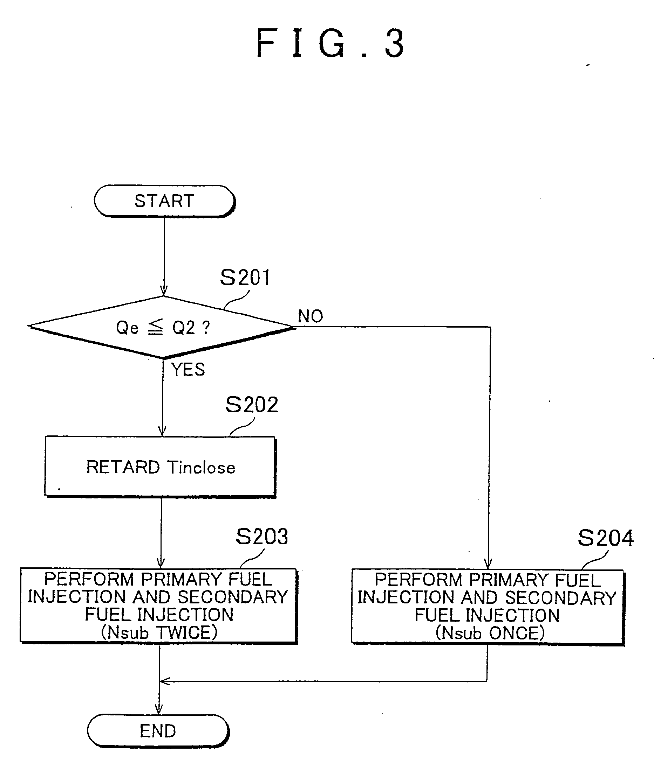

A control routine for valve timing and fuel injection control according to the second exemplary embodiment will now be described based on the flowchart shown in FIG. 3. This routine is stored in the ECU 20 in advance and executed at predetermined intervals of time.

In this routine, the ECU 20 determines first in step S201 whether an engine load Qe is equal to or less than a predetermined load Q2 according to the second exemplary embodiment. If the determination is yes, the process proceeds on to step S202. If the determination is no, the process proceeds on to step S204.

In step S204, the ECU 20 performs a primary fuel injection and a secondary fuel injection. The number of times Nsub that the secondary fuel injection is performed in one combustion cycle at this time is once. The routine then ends.

In step S202, on the other hand, the ECU 20 retards the closing timing Tinclose of the intake valve 6 compared with when the engine load Qe is greater than the predetermined load Q2.

Next in step S203, the ECU 20 performs a primary fuel injection and a secondary fuel injection. The number of times Nsub that the secondary fuel injection is performed in one combustion cycle at this time is twice. The routine then ends.

The retard amount of the closing timing Tinclose of the intake valve 6 in step S202 and the fuel injection quantity per one secondary fuel injection in steps S203 and S204 are determined according to the load Qe on the internal combustion engine 1. The fuel injection quantity per one secondary fuel injection is controlled to a quantity that can be accurately controlled. Also, the closing timing Tinclose of the intake valve 6 is controlled such that the actual engine compression ratio becomes a value than inhibits the temperature of the combustion chamber 11 from rising too high even when the secondary fuel injection is performed twice in one combustion cycle.

## Claims

1. A fuel injection control system of a compression ignition internal combustion engine which, using a fuel injection valve (10) that injects fuel directly into a combustion chamber (11), can perform a primary fuel injection, and a secondary fuel injection that is performed before the primary fuel injection is performed and at a timing at which fuel of the secondary fuel injection will burn in the combustion chamber (11), **characterised by** comprising:
actual compression ratio controlling means for reducing an actual compression ratio of the compression ignition internal combustion engine (1) according to a condition related to the secondary fuel injection.

2. The fuel injection control system of a compression ignition internal combustion engine according to claim 1, **characterised by** further comprising:
switching means for switching between performing the secondary fuel injection and not performing the secondary fuel injection depending on an operating state of the compression ignition internal combustion engine (1), wherein the actual compression ratio controlling means reduces the actual compression ratio of the compression ignition internal combustion engine (1) during the condition in which the secondary fuel injection is performed compared to during a condition in which the secondary fuel injection is not performed.

3. The fuel injection control system of a compression ignition internal combustion engine according to claim 1, **characterised by** further comprising:
fuel injection number changing means for changing the number of times the secondary fuel injection is performed in one combustion cycle depending on the operating state of the compression ignition internal combustion engine (1), wherein the actual compression ratio controlling means progressively reduces the actual compression ratio of the compression ignition internal combustion engine (1) during the condition in which the number of times the secondary fuel injection is performed during one combustion cycle becomes progressively greater.

4. A fuel injection control method of a compression ignition internal combustion engine which, using a fuel injection valve (10) that injects fuel directly into a combustion chamber (11), can perform a primary fuel injection, and a secondary fuel injection that is performed before the primary fuel injection is performed and at a timing at which fuel of the secondary fuel injection will burn in the combustion chamber (11), **characterised by** comprising:
reducing an actual compression ratio of the compression ignition internal combustion engine (1) according to a condition related to the secondary fuel injection.

5. The fuel injection control method of a compression ignition internal combustion engine according to claim 4, **characterised by** further comprising:
switching between performing the secondary fuel injection and not performing the secondary fuel injection depending on an operating state of the compression ignition internal combustion engine (1); and
reducing the actual compression ratio of the compression ignition internal combustion engine (1) during the condition in which the secondary fuel injection is performed compared to during the condition in which the secondary fuel injection is not performed.

6. The fuel injection control system of a compression ignition internal combustion engine according to claim 4, **characterised by** further comprising:
changing the number of times the secondary fuel injection is performed in one combustion cycle depending on the operating state of the compression ignition internal combustion engine (1); and
progressively reducing the actual compression ratio of the compression ignition internal combustion engine (1) during the condition in which the number of times the secondary fuel injection is performed during one combustion cycle becomes progressively greater.
